(19) Europäisches Patentamt
European Patent Office
Office européen des brevets

(11) Veröffentlichungsnummer : **0 315 849 B1**

# (12) EUROPÄISCHE PATENTSCHRIFT

(45) Veröffentlichungstag der Patentschrift : **24.07.91 Patentblatt 91/30**

(51) Int. Cl.$^5$ : **C09C 1/00,** C01G 29/00

(21) Anmeldenummer : **88118075.6**

(22) Anmeldetag : **31.10.88**

## (54) Verfahren zur Herstellung von Bismutoxidchlorid-Perlglanzpigmenten.

(30) Priorität : **10.11.87 DE 3738114**

(43) Veröffentlichungstag der Anmeldung : **17.05.89 Patentblatt 89/20**

(45) Bekanntmachung des Hinweises auf die Patenterteilung : **24.07.91 Patentblatt 91/30**

(84) Benannte Vertragsstaaten : **DE ES FR GB IT NL**

(56) Entgegenhaltungen : **US-A- 3 798 313**

(56) Entgegenhaltungen : **CHEMICAL ABSTRACTS, Band 103, Nr. 12, 23. September 1985, Seite 666, Zusammenfassung Nr. 97779s, Columbus, Ohio, US; B.Z. NURGALIEV et al.: "Hydrothermal synthesis of bismuth oxychlorides", & ZH. NEORG. KHIM. 1985, 30(7), 1665-7**

(73) Patentinhaber : **BASF Aktiengesellschaft Carl-Bosch-Strasse 38 W-6700 Ludwigshafen (DE)**

(72) Erfinder : **Ostertag, Werner, Dr. Oberer-Bergel-Weg 2 W-6718 Gruenstadt (DE)**
Erfinder : **Schwidetzky, Christoph, Dr. Muehlweg 27 W-6703 Limburgerhof (DE)**
Erfinder : **Mronga, Norbert, Dr. Ringstrasse 2 W-6915 Dossenheim (DE)**

EP 0 315 849 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Vorliegende Erfindung betrifft ein Verfahren zur Herstellung von plättchenförmigen Bismutoxidchlorid-Perlglanzpigmenten.

Die optische Wirkung der Perlglanzpigmente beruht auf gerichteter Reflektion an plättchenförmig ausgebildeten, stark lichtbrechenden, durchscheinenden Pigmentpartikeln mit glatten Oberflächen. Der mittlere Partikeldurchmesser der Perlglanzpigmente ist weit größer als derjenige von Pigmenten deren Wirkung auf Streuung oder Absorption beruht. Er bestimmt die Art des Effektes, der für Plättchen mit kleinerem Durchmesser seidig weich erscheint, für Plättchen mit größerem Durchmesser in charakteristischer Weise glitzert.

Zu den ältesten bekannten synthetischen Perlglanzpigmenten zählt das Bismutoxidchlorid, das Schichtstruktur aufweist und im allgemeinen in quadratischen Doppelpyramiden kristallisiert, die die Form von Blättchen annehmen können.

Bismutoxidchlorid-Perlglanzpigmente werden allgemein durch Hydrolyse löslicher Bismutsalze in Gegenwart von Chlorid-Ionen gefällt :

$$Bi^{3+} + Cl^- + H_2O \rightarrow BiOCl + 2H^+$$

wobei der Einhaltung bestimmter Reaktionsparameter wie Konzentration, Rührbedingungen, pH-Wert, Temperatur und Reaktionszeiten eine entscheidende Bedeutung zukommt, um plättchenförmige BiOCl-Kristalle mit Perlglanzeigenschaften zu erhalten.

Für die Herstellung von BiOCl-Perlglanzpigmenten sind schon verschiedene Verfahren bekannt geworden.

In der US-PS 3 798 313 ist ein Verfahren beschrieben, bei dem man von Bismutsalzen ausgeht, die in Wasser gelöst in Gegenwart von Salzsäure hydrolysiert werden. Hierzu wird zunächst eine wäßrige Salzsäurelösung eines Bismutsalzes mit einem Bi/HCl-Gewichtsverhältnis von 0,2 : 1 bis 0,8 : 1 in ein vorgelegtes Volumen von Wasser, das zur Vermeidung einer spontanen Hydrolyse weniger als etwa 1/2 Gew.% HCl enthält, eingetragen. Die Temperatur beträgt dabei 60°C bis zum Siedepunkt der Lösung. Hierbei fällt das Bismutsalz langsam unter Bildung von BiOCl-Keimen aus. Durch langsame Zugabe einer weiteren, Bismutsalz-HCl-Lösung mit einem Bi/HCl-Gewichtsverhältnis von 1 : 1 bis 2 : 1 wird weiteres BiOCl ausgefällt, das auf die primär gebildeten Keime aufwächst.

In der rumänischen Patentschrift 88 423 wird ein Verfahren zur Herstellung von BiOCl-Perlglanzpigmenten beschrieben, das ebenfalls auf der Hydrolyse von Bismutsalzen, nämlich Bismutnitrat beruht. Hierzu wird eine Lösung von Bismutnitrat in einem n-Propanol enthaltenden $HCl/HNO_3$-Gemisch zum Sieden erhitzt und dann langsam mit einer verdünnten wäßrigen NaOH-Lösung versetzt. Nach dem Abkühlen wird abfiltriert.

Bei einem weiteren, in der SU-PS 436 844 beschriebenen Verfahren werden BiOCl-Perlglanzpigmente ebenfalls durch Hydrolyse von salzsauren Bismutnitrat-Lösungen hergestellt, die in ein Wasser/Isopropanol-Gemisch eingetragen werden. Die erhaltene Reaktionsmischung wird in einem weiteren Arbeitsgang bei 90 bis 96°C in Wasser eingetragen. Nach dem Abkühlen werden die BiOCl-Kristalle abfiltriert, gewaschen und mit Castoröl in Gegenwart von Dispergiermitteln zu einer Paste verarbeitet.

Wesentlich bei diesen auf der Hydrolyse von Bismutsalzen in Gegenwart von Chloridionen beruhenden Verfahren ist, daß in relativ hohen Verdünnungen gearbeitet wird und daß das Ausfällen der BiOCl-Kristalle langsam unter Einhaltung zahlreicher für die Kristallisation kritischer Bedingungen durchgeführt wird. Eine reproduzierbare Herstellung von BiOCl-Perlglanzpigmenten ist somit stark erschwert, wenn nicht gar unmöglich.

In einer wissenschaftlichen Studie über Bismutoxidchloride mit variierbarem Cl-Gehalt (Russ. J. of Inorg. Chem. 30 (7) 1985 Seiten 948-949) wird eine Methode zur Herstellung von BiOCl angegeben, die von einer Verbindung der Zusammensetzung $Bi_{12}O_{17}Cl_2$ ausgeht. Diese Verbindung wird durch 240-stündiges Erhitzen einer Mischung von $BiCl_3 \cdot 2H_2O$ mit $Bi_2O_3$ auf Temperaturen von 600°C erhalten. Das Material wird dann in Gegenwart von wäßrigen Lösungen von HCl, $NH_4Cl$, LiCl und KCl hydrothermal bei Temperaturen von 400°C innerhalb von 5 bis 7 Tagen behandelt. Ein solches Verfahren kommt wegen der über einen ausgedehnten Zeitraum anzuwendenden hohen Temperaturen sowohl bei der Herstellung des Ausgangsproduktes $Bi_{12}O_{17}Cl_2$ als auch bei seiner anschließenden hydrothermalen Behandlung für eine technische Herstellung von BiOCl-Perlglanzpigmenten nicht in Frage.

Aufgabe der vorliegenden Erfindung war es daher, ein Verfahren zur Herstellung von BiOCl-Perlglanzpigmenten anzugeben, das es gestattet in guter Raum/Zeit-Ausbeute und unter Vermeidung von mit erheblichem Meß- und Regelaufwand einzuhaltenden Verfahrensparametern BiOCl-Perlglanzpigmente mit reproduzierbaren Eigenschaften zu erzeugen.

Diese Aufgabe wird bei einem Verfahren zur Herstellung von plättchenförmigen Perlglanzpigmenten aus Bismutoxidchlorid durch Hydrolyse von in Wasser gelösten Bismutsalzen in Gegenwart von Chloridionen unter Bildung von Bismutoxichlorid dadurch gelöst, daß man das durch Hydrolyse gebildete Bismutoxidchlorid anschließend hydrothermal bei Temperaturen von 120 bis 360°C bei pH-Werten von 0,2 bis 5,5 behandelt.

Ausgehend von Bismutsalzen, insbesondere Bismutnitrat wird zunächst eine saure Bismutsalzlösung hergestellt. Die Lösung enthält zweckmäßig pro Liter 0,2 bis 3 Mol Bismutsalz und wird durch Zugabe von Salzsäure oder Mischungen von Salzsäure mit der Säure des Bismutsalzes auf einen pH-Wert von − 1,5 bis + 0,5 gestellt, um eine vorzeitige Hydrolyse zu vermeiden. In der sauren Lösung soll ein Atomverhältnis von Bi : Cl von 1 : 1 bis 1 : 5 vorliegen. Aus diesen Lösungen wird durch Anheben des pH-Wertes auf > 1, zweckmäßigerweise 1,5 bis 7, sei es durch Verdünnen mit Wasser, sei es durch Zugabe von Alkalien BiOCl gefällt. Zweckmäßig werden dabei Temperaturen von 60 bis 100°C eingehalten.

Wesentlich ist, daß in dieser Stufe lediglich die Ausfällung von BiOCl anzustreben ist und daß es nicht darauf ankommt, durch gezielte Einstellung bestimmter Verfahrensparameter bereits ein Produkt mit plättchenförmiger Struktur zu erhalten. Aus diesem Grund können zwecks Erzielung hoher Raum-Zeit-Ausbeuten konzentrierte Bismutsalzlösungen eingesetzt werden und die Fällzeit ist nicht wie bei den bekannten Verfahren kritisch.

Aus den Reaktionsmischungen kann das BiOCl abgetrennt werden, es ist aber auch möglich, die Reaktionsmischungen direkt der hydrothermalen Behandlung zu unterwerfen.

Das in der ersten Stufe erhaltene Bismutoxidchlorid wird mit Wasser zu einer 2 bis 70, vorzugsweise 5 bis 30 gew.%igen Suspension vermischt und durch Zugabe von Salzsäure auf pH-Werte von 0,2 bis 5,5, vorzugsweise von 0,5 bis 2,5, gestellt. Die Suspension wird in einen, wegen des Chloridgehaltes aus korrosionsfesten Materialien z.B. Tantal, oder Email ausgekleideten Autoklaven eingebracht und dort auf Temperaturen von 120 bis 360°C, vorzugsweise von 150 bis 250°C, erhitzt. Die Dauer der Behandlung richtet sich nach dem eingestellten pH-Wert und der gewählten Temperatur und sie kann bei vorgegebener mittlerer Partikelgröße des herzustellenden BiOCl-Perlglanzpigmentes umso kürzer sein, je niedriger der pH-Wert und je höher die Temperatur innerhalb der angegebenen Bereiche ist. Im allgemeinen beträgt die Dauer der hydrothermalen Behandlung 0,1 bis 8 Stunden. Nach dem Abkühlen werden die gebildeten BiOCl-Perlglanzpigmente filtriert, gewaschen und getrocknet.

Das erfindungsgemäße Verfahren hat gegenüber den bekannten Verfahren zur Herstellung von Bismutoxidchlorid-Perlglanzpigmenten, die ebenfalls auf der Hydrolyse von Bismutsalzen beruhen, den Vorteil, daß Fällung und Kristallwachstum in zwei Stufen ablaufen und nicht bei der Fällung gleichzeitig auch die Parameter zu beachten sind, die ein Wachstum der Kristalle zur optimalen Plättchenform gewährleisten. Aus diesem Grunde kann in der Fällungsstufe auf die Einhaltung von Verfahrensparametern innerhalb enger Grenzen verzichtet werden. Es ist lediglich dafür Sorge zu tragen, daß durch Erhöhung des pH-Wertes in Anwesenheit von Chloridionen eine vollständige Hydrolyse des Bismutsalzes unter Bildung von BiOCl eintritt. Eine gezielte Kristallisation des in der ersten Stufe erzeugten BiOCl erfolgt erst in der zweiten Stufe der hydrothermalen Behandlung. Sie wird lediglich durch den anfangs mit HCl eingestellten pH-Wert, durch die Temperatur und die Behandlungsdauer, alles Größen, die keinen hohen regeltechnischen Aufwand erfordern, beeinflußt. Die hydrothermal nachbehandelten Produkte weisen gegenüber den eingesetzten Produkten stets einen höheren Glanz auf, was darauf zurückzuführen ist, daß durch die erfindungsgemäße hydrothermale Nachbehandlung u.a. eine Desagglomeration der eingesetzten Ausgangssubstanzen bewirkt wird, d.h. daß agglomerierte oder sogar verwachsene Teilchen des Ausgangsproduktes in diskret vorliegende Einzelpartikel umgewandelt werden. Aus der Teilchengrößenverteilung des hydrothermal nachbehandelten Produktes geht ferner eindeutig hervor, daß durch diese Behandlung ein enges Teilchengrößenspektrum erreicht wird. REM- und TEM-Aufnahmen zeigen Plättchen mit gleichmäßigem Durchmesser zu Dickenverhältnis und glatten Oberflächen. Bei der Hydrothermalbehandlung nimmt der mittlere laterale Durchmesser der Partikel zu.

Bei den in den folgenden Beispielen angegebenen Prozenten handelt es sich, falls nicht anders vermerkt, um Gewichtsprozente.

Die Beispiele 1 und 2 beschreiben die Herstellung des als Ausgangsprodukt verwendeten Bismutoxichlorids durch Hydrolyse und die Beispiele 3 bis 6 die hydrothermale Nachbehandlung.

Beispiel 1

In einem 2 l-Vierhalskolben, ausgestattet mit Rührer, pH-Messung und 2 Dosierpumpen wird eine Lösung von 15 g 38%ige HCl (0,15 Mol HCl) in 1000 ml Wasser vorgelegt. In die auf 70°C erwärmte Vorlage wird eine Lösung von 239,6 g $Bi(NO_3)_3 \cdot 5\ H_2O$ (0,5 Mol) in 145 g 38%ige HCl (1,5 Mol), 145 g (1,5 Mol) 65%ige $HNO_3$ und 200 ml Wasser mit einer Geschwindigkeit von 15 ml/min eindosiert, wobei der pH-Wert in der Vorlage durch gleichzeitige Zugabe von 6 N Natronlauge bei Werten zwischen 0,65 bis 0,88 gehalten wird. Nach beendeter

Zugabe (30 min) wird der pH-Wert auf 2,5 erhöht, und das erhaltene BiOCl durch Dekantieren von der überstehenden Lösung getrennt.

Das erhaltene Produkt ist weiß, zeigt keinen Glanz und hat eine breite Teilchengrößenverteilung, die Cilas-granulometrisch mit 6,8 µm im Mittel gemessen wird.

Beispiel 2

In einem 2 l-Vierhalskolben mit Rührer, pH-Messung und angeschlossener Dosier-Pumpe werden 25 ml 65%ige $HNO_3$, 21 ml HCl (0,26 Mol), 10 ml n-Propanol und 400 ml $H_2O$ vorgelegt. 121,25 g $Bi(NO_3)_3 \cdot 5 H_2O$ (0,25 Mol) werden unter Rühren in die Vorlage eingetragen. Bei einem pH von 0,45 wird bis zum Rückfluß erhitzt, und durch Zudosierung von 1000 ml 1 n NaOH mit einer Rate von 20 ml/min das Bismutoxidchlorid ausgefällt. Nach 30 min Nachrührzeit wird die Lösung abgekühlt, das BiOCl abfiltriert und mit Wasser gewaschen.

Das erhaltene Produkt ist weiß und hat keinen Glanz. Es zeigt in der rasterelektronischen Aufnahme zahlreiche größere (10 µm) Agglomerate, die aus vielen ineinanderwachsenden 1 µm großen Plättchen bestehen.

Beispiel 3

Das gemäß Beispiel 1 erhaltene BiOCl wird in einer 5%igen Suspension angemaischt, und in einen rühr- und heizbaren Autoklaven mit Tantal-Innenauskleidung eingefüllt. Der pH-Wert wird durch Zusatz von 38%iger HCl auf 3 gestellt. Der Autoklav wird unter Rühren (300 $min^{-1}$) auf 200°C erhitzt, 30 min bei dieser Temperatur belassen, dann abgekühlt.

Das abfiltrierte Produkt ist hochglänzend und zeigt in der rasterelektronischen Vergrößerung einheitliche Plättchen mit glatten Oberflächen.

Beispiel 4

Unter sonst gleichen Bedingungen, wie den in Beispiel 3 beschrieben, wird die hydrothermale Behandlung über einen Zeitraum von 60 Minuten durchgeführt.

Zur Beurteilung des Glanzes wird das erhaltene Pigment in einer Pigmentkonzentration von 25% in ein Polyesterharz durch fünfminütiges Schütteln im Red Devil eingearbeitet und dann in einer Naßfilmdicke von 200 µm auf schwarzem Papier appliziert.

Nach dem Trocknen wird der Ausstrich mit einem "Erichsen-Glossmaster" (Reflektor zur Glanzmessung, Modell 507) unter einem Winkel von 60° und 85° untersucht.

In der folgenden Tabelle 1 ist der Glanz des hydrothermal unbehandelten Pigmentes (Beispiel 1) dem Glanz des hydrothermal nachbehandelten Pigmentes (Beispiel 4) gegenübergestellt :

Tabelle 1

| Beispiel | hydrothermale Nachbehandlung Zeit [min] | mittlere Teilchengröße [µm] | Glanzmessung 60° | 85° |
|---|---|---|---|---|
| 1 | | 6,8 | 0,7 | 0,1 |
| 4 | 60 | 11,3 | 8,0 | 14,5 |

Aus der Tabelle ist zu ersehen, daß die Hydrothermalbehandlung eine erhebliche Glanzsteigerung gegenüber dem Ausgangsprodukt bewirkt. REM-Aufnahmen des gemäß Beispiel 4 erhaltenen Pigmentes zeigen Teilchen mit gerundeten Konturen. Die Oberflächen dieser Teilchen sind sehr glatt. Das Cilas-granulometrisch gemessene Wachstum der Teilchen bei längeren Verweilzeiten wird durch die REM-Aufnahmen bestätigt.

Beispiel 5

Wie in Beispiel 3 beschrieben, wird das gemäß Beispiel 1 erhaltene BiOCl bei einem pH-Wert von 1,0 unter sonst gleichen Bedingungen aufgeheizt. Nach dem Aufheizen wurde der Rührer abgeschaltet und das Reaktionsgemisch 2 Stunden lang bei einer Temperatur von 200°C hydrothermal behandelt.

Das erhaltene Produkt ist plättchenförmig und zeigt keinerlei Agglomerationen oder Verwachsungen. Die Teilchen weisen glatte Oberflächen und gerundete Konturen auf, wie aus REM-Aufnahmen hervorgeht.

Tabelle 2

| Beispiel | pH-Wert | mittlere Teilchengröße [µm] | Glanzmessung 60° | 85° |
|---|---|---|---|---|
| 1 | - | 6,8 | 0,7 | 0,1 |
| 5 | 1,0 | 16,2 | 12,9 | 23,5 |

Aus der Tabelle 2 ist zu ersehen, daß die hydrothermale Behandlung eine erhebliche Steigerung des Glanzes bewirkt.

Beispiel 6

Das gemäß Beispiel 2 erhaltene Produkt wird in Form einer 25%igen wäßrigen Dispersion in einen rühr- und heizbaren Autoklaven mit Emaille-Innenauskleidung eingefüllt. Der pH-Wert wird durch Zusatz von 38%iger HCl auf 1,1 gestellt. Der Autoklav wird unter Rühren (300 $min^{-1}$) auf 200°C erhitzt. Dann wird der Rührer abgeschaltet, 60 min bei dieser Temperatur belassen und dann abgekühlt. Anschließend wird das Produkt abfiltriert, gewaschen und getrocknet.

Das erhaltene Produkt ist hochglänzend und zeigt im Rasterelektronenmikroskop diskrete plättchenförmige Partikel mit einem mittleren Durchmesser von 12,3 µm. Die Oberflächen der Teilchen sind glatt, die Konturen gerundet. Die Glanzwerte des Produktes sind in der Tabelle 3 den Werten des nicht hydrothermalbehandelten Ausgangsmaterials (Beispiel 2) gegenübergestellt.

Tabelle 3

| Beispiel | Art der Teilchen | Glanzmessung 60° | 85° |
|---|---|---|---|
| 2 | Agglomerate | 0,7 | 0,1 |
| 6 | Einzelpartikel | 6,9 | 2,1 |

Auch hier zeigt die hydrothermale Nachbehandlung eine erhebliche Steigerung des Glanzes.

**Patentansprüche**

1. Verfahren zur Herstellung von plättchenförmigen Perlglanzpigmenten aus Bismutoxidchlorid durch Hydrolyse von in Wasser gelösten Bismutsalzen in Gegenwart von Chloridionen unter Bildung von Bismutoxidchlorid, dadurch gekennzeichnet, daß man das durch Hydrolyse gebildete Bismutoxidchlorid anschließend hydrothermal bei Temperaturen von 120 bis 360°C bei pH-Werten von 0,2 bis 5,5 behandelt.

2. Verfahren nach Anspruch 1, dadurch gekennzeichnet, daß der pH-Wert 0,5 bis 2,5 beträgt.

3. Verfahren nach Ansprüchen 1 bis 2, dadurch gekennzeichnet, daß die Behandlung bei Temperaturen von 150 bis 250°C vorgenommen wird.

4. Verfahren nach Ansprüchen 1 bis 3, dadurch gekennzeichnet, daß die Behandlung in Gegenwart gelöster Chloridionen durchgeführt wird.

5. Verfahren nach Ansprüchen 1 bis 4, dadurch gekennzeichnet, daß man von einem Bismutoxidchlorid für die hydrothermale Behandlung ausgeht, das durch Hydrolyse einer wäßrigen, salzsauren Bismutsalzlösung mit einem Bismutsalzgehalt von 0,2 bis 3 Mol/Liter, einem pH-Wert von – 1,5 bis + 0,5 und einem Bi : Cl-Atomverhältnis von 1 : 1 bis 1 : 5 durch Anheben des pH-Wertes auf > + 1 erhalten worden ist.

## Claims

1. A process for preparing a plateletlike pearl luster pigment of bismuth chloride oxide by hydrolyzing a bismuth salt in aqueous solution in the presence of chloride ions to form bismuth chloride oxide and then subjecting this bismuth chloride oxide to a hydrothermal treatment at from 120 to 360°C and at pH 0.2-5.5.

2. A process as claimed in claim 1, wherein the pH is from 0.5 to 2.5.

3. A process as claimed in claim 1 or 2, wherein the treatment is carried out at from 150 to 250°C.

4. A process as claimed in any of claims 1 to 3, wherein the treatment is carried out in the presence of dissolved chloride ions.

5. A process as claimed in any of claims 1 to 4, wherein the starting material for the hydrothermal treatment is a bismuth chloride oxide obtained by hydrolyzing an aqueous hydrochloric acid bismuth salt solution having a bismuth salt content of from 0.2 to 3 moles/liter, a pH of from – 1.5 to + 0.5 and a Bi : Cl atomic ratio of from 1 : 1 to 1 : 5 by raising the pH to > + 1.

## Revendications

1. Procédé de préparation de pigments nacrés en paillettes à partir d'oxychlorure de bismuth par hydrolyse de sels de bismuth en solution dans l'eau en présence d'ions chlorure par formation d'oxychlorure de bismuth, caractérisé en ce qu'on traite ensuite l'oxychlorure de bismuth formé par hydrolyse, par voie hydrothermale à des températures de 120 à 360°C à des pH de 0,2 à 5,5.

2. Procédé selon la revendication 1, caractérisé en ce que le pH s'élève à 0,5-2,5.

3. Procédé selon l'une ou l'autre des revendications 1 et 2, caractérisé en ce que le traitement est mené à des températures de 150 à 250°C.

4. Procédé selon l'une quelconque des revendications 1 à 3, caractérisé en ce que le traitement est effectué en présence d'ions chlorure dissous.

5. Procédé selon l'une quelconque des revendications 1 à 4, caractérisé en ce que, pour le traitement hydrothermal, on part d'un oxychlorure de bismuth qui a été obtenu par hydrolyse d'une solution de sel de bismuth dans l'acide chlorhydrique aqueux avec une teneur en sel de bismuth de 0,2 à 3 moles/1, un pH de – 1,5 à + 0,5 et un rapport atomique Bi : Cl de 1 : 1 à 1 : 5 en relevant la valeur du pH au-dessus de + 1.